# EUROPEAN PATENT SPECIFICATION

(11) **EP 4 342 075 B1**
(45) Date of publication and mention of the grant of the patent: **02.09.2026**
(21) Application number: 21728025.4
(22) Date of filing: 19.05.2021
(51) Int. Cl.: H02S 20/00

(54) **METHOD FOR ASSEMBLING A FLOATING SOLAR SYSTEM, AND CORRESPONDING SYSTEM**
VERFAHREN ZUR MONTAGE EINER SCHWIMMENDEN SOLARANLAGE UND ENTSPRECHENDE ANLAGE
PROCÉDÉ D'ASSEMBLAGE D'UN SYSTÈME SOLAIRE FLOTTANT ET SYSTÈME CORRESPONDANT

(43) Date of publication of application: 27.03.2024
(73) Proprietor: Helioslite, 73370 Le Bourget du Lac (FR); Menard, Etienne, 73420 Voglans (FR)
(72) Inventor: MENARD, Etienne, 73420 Voglans (FR)
(74) Representative: IP Trust
(86) International application number: PCT/EP2021/063394
(87) International publication number: WO 2022/242858

(56) References cited:
- WO-A1-2020/198618
- CN-B- 102 669 031
- US-A1- 2012 279 557

## Description

### FIELD OF THE INVENTION

This invention is in the general field of solar power generation.

More specifically, one particularly important, although nonexclusive, application of the invention is in the field of floating photovoltaic solar systems.

### PRIOR ART DISCUSSION

Most of the floating solar systems which have been deployed relies on the use of plastic floaters which are attached together to form a densely packed "island" which supports an array photovoltaic module at a fixed inclination angle. Patent document EP3083392B1 presents an example of a standard hollow plastic float design which is typically manufactured by blow molding. As these plastic floats have a closed hollow shape, their associated shipping cost is relatively high due to the large volume required for packing and transporting.

Patent document ES1143535U presents an improved float design which comprises a lower part and a cover part which can be packed separately and assembled together on site. As the lower and cover parts are stackable, the volume required for transporting these plastic parts is significantly reduced.

However, as a large amount of raw material is required for the fabrication of these plastic parts the carbon footprint and overall cost for fabricating these floats remains relatively high.

As the molding processes which are used for manufacturing these parts require a minimum wall thickness which is typically ≥3 mm, the mass of plastic material required for the fabrication of a 1 MW floating solar plant typically exceed 40 tons.

As each float is designed to support only a single PV module and need to be manually assembled and joined together using multiple metallic or plastic fasteners, the time required for assembling this type of floating solar system is relatively high and typically exceeds 500 man-hours for each megawatt (MW) of solar plant power installed.

Moreover, extra floats need to be added inside each island to create service lanes in order to allow maintenance operations to be performed on the floating solar plant.

Patent documents JP2011066200A, US20120279557A1 and US10411643 present alternative float designs relying on elongated tubular shaped flotation elements which are designed to carry a metal frame structure supporting an array of photovoltaic modules.

Here the tubular shaped flotation elements of these floats are typically manufactured using an extrusion process. A minimum wall thickness ≥3mm is therefore also typically required for the fabrication of extruded hollow shaped profiles (such as tubes).

This second class of float design do not address the material usage issue of standard individual plastic floats as a large mass of raw material is still required for the fabrication of the tubes and module support structure of these floats.

Moreover, the cost for transporting prefabricated tube elements remains high as a large volume is required for packing and shipping these items. In addition, the metal frame structure supporting the array of photovoltaic modules is relatively heavy and complex to assemble as the metal frame structures presented in these prior art systems comprise many elements which are designed to be manually joint together on site using multiple fasteners.

For these two classes of prior art floating solar systems, the overall buoyancy of their flotation elements needs to be over-sized in order to support the weight of an operator walking on a service lane.

In order to limit the cost impact of this requirement, most of the utility scale floating solar system comprise a rather limited number of service lanes.

In such configuration, simple maintenance operations such as replacing or cleaning a photovoltaic module can be quite difficult to perform as a large fraction of the photovoltaic modules installed are not directly accessible from a service lane.

The maintenance operators need to remove several modules and/or walk over their top surface in order to be able to change a photovoltaic module which is not located next to a walk-able service lane.

Finally, for almost all of the prior floating solar systems, an extra row of water ballasted float elements need to be installed around the perimeter of each "island" in order to avoid the risk of lifting when the system is exposed to high winds. This extra border row of float elements adds additional costs and further increase installation time.

As unfortunately it has been widely reported in press articles, this type of design approach is also prone to catastrophic failures as a rupture of a single connection point between the external border row elements and the mooring lines can lead to the total destruction of a large fraction of a floating solar plant.

It is also known (WO 2020/165272) supporting tubes for solar tracker assemblies which limit risks of lifting in strong winds, but which are still to be improved for instance as per their installation cost.

The document US 2012/279557A1 discloses a floating support structure for a solar panel array. The disclosed float assembly comprises floating tube elements that are fabricated from **e.g.** PVC, HDPE, ABS, CPVC tubing materials.

The document WO 2020/198618 A1 discloses a floating solar tracker which includes solar panels, a mechanical support structure and a floating structure. The floating structure includes a pair of hollow cylinders, such as PVC pipes.

In order to address the main limitations of these prior art solutions, this invention presents a novel float design which relies on a specific distributed manufacturing method which enable significant reductions of the mass of raw material required, a significant reduction of the shipping volume required for transportation and a significant reduction of the time required for assembling and launching onto water this new class of floating solar system.

It is also another object of the invention to provide a float design relying on flotation elements which are designed to be partially filled with water in order to improve the system overall resistance when the floats are exposed to high winds in order to eliminate the risk of a catastrophic failure.

It is yet another object of the invention to provide a specific system layout which comprises underwater mooring lines and unobstructed water service lanes between each row of float elements. These unobstructed water service lanes uniquely enable the use of a dedicated platform for performing maintenance operations in a more efficient and safer manner.

It is a further object of the invention to provide an efficient and easy to run method of maintaining clean and electrically efficient photovoltaic solar systems and their corresponding devices.
According to theses aims one object of the invention is mainly to propose a method for realization of a floating photovoltaic solar system on a water site, said water site having a shore and a water body, said system comprising photovoltaic panels each having a mechanical structure and at least one array of float assemblies, each float assembly comprising at least one group of at least two floating tube elements for supporting said photovoltaic panels, wherein it comprises the following steps:
- obtaining and transporting on the water site coils of thin material,
- processing on shore and in situ at least two elongated ribbons or at least two extended sheets obtained from said coils for deforming said ribbons or bending said sheets into at least two corresponding thin wall elongated hollow open tube elements, said open tubes elements extending along a respective primary axis and having respectively unjointed elongated edges arranged to lie against each other, said processing including the step of using a spiral tube forming machine in case of ribbons or a roll-forming machine in case of sheets,
- mechanically joining together, the elongated edges of said ribbons or of said sheets using a mechanical crimping, fastening or fixing process, for forming said respective floating tube elements,
- fixing an endcap to each end of each of said floating tube elements,
- joining together said floating tube elements of each of said group of floating tube elements, with frame assemblies, and mounting said photovoltaic panels onto said frame assemblies or joining together said floating tube elements of each group by fixing the mechanical structure itself of the photovoltaic panels on said floating tube elements, in order to form said at least one array of float assemblies and forming accordingly said floating photovoltaic system,
and launching said floating photovoltaic system into water.

By thin material it should be understood a material having a thickness of less than 1 mm.

By mechanically joining together elongated edges using a mechanical crimping, fastening or fixing process it should be understood any joining using mechanical fasteners such as bolts, rivets or cold-forming methods relying on clinching tools or welding processes or structural glue or alternative fastening methods known in the art.

Advantageously the coils are raw metal coils, for example in aluminum, but it can also be thin flexible composite material or even thin flexible sheet or ribbon of plastic material.

In an advantageous embodiment the processing is more specifically using a spiral tube forming machine to deform said ribbons in spiral having their unjointed longitudinal adjacent elongated edges mechanically crimped together to fabricate said respective floating tube element.

In another advantageous embodiment the processing is using a roll forming machine to bend said sheets in order to have their unjointed elongated edges relying against each other and then having them mechanically joined together using such mechanical crimping, fastening or fixing process for forming said respective floating tube elements.

In another embodiment of the invention it is proposed a method for realization of a floating photovoltaic solar system on a water site, said water site having a shore and a water body, said system comprising photovoltaic panels each having a mechanical structure and at least one array of float assemblies, each float assembly comprising at least one group of at least two floating tube elements for supporting said photovoltaic panels, wherein it comprises the following steps:
- obtaining and transporting on the water site coils of thin material,
- processing on shore and in situ elongated ribbons obtained from said coils for deforming them into at least two thin wall elongated hollow open tube elements, said open tube elements extending along a respective primary axis, said processing including the step of using a spiral tube forming machine for forming said open tube elements,
- mechanically joining together the long edges of said metal ribbon to fabricate said respective floating tube elements,
- fixing an endcap to each end of each of said floating tube elements,
- joining together said floating tube elements of each of said group of floating tube elements, with frame assemblies, and mounting said photovoltaic panels onto said frame assemblies or joining together said floating tube elements of each group by fixing the mechanical structure itself of the photovoltaic panels on said floating tube elements, in order to form said at least array of float assemblies and forming accordingly said floating photovoltaic system.

Additionally, it further comprises a step of launching said floating photovoltaic system into the water body, either one by one float assembly or successively each array of float assemblies already connected between each other.

In an alternative embodiment, it is also and/or further proposed a method for realization of a floating photovoltaic solar system on a water site said water site having a shore and a water body, said system comprising photovoltaic panels each having a mechanical structure and at least one array of float assemblies, each float assembly comprising at least one group of at least two floating tube elements for supporting said photovoltaic panels, wherein it comprises the following steps:
- obtaining and transporting on the water site coils of thin material,
- processing on shore and in situ sheets obtained from said coils for bending them into at least two thin wall elongated hollow open tube elements having respectively unjointed elongated edges lying against each other, said open tube elements extending along a respective primary axis, said processing including the step of using a roll-forming machine,
- mechanically joining together, the edges of each respective open tube elements using a welding, mechanical crimping, fastening or fixing process, for forming said respective floating tube elements,
- fixing an endcap to each end of each of said floating tube elements,
joining together said floating tube elements of each of said group of floating tube elements, with frame assemblies, and mounting said photovoltaic panels onto said frame assemblies or joining together said floating tube elements of each group by fixing the structure itself of the photovoltaic panels on said floating tube elements, in order to form said at least array of float assemblies and forming accordingly said floating photovoltaic system, with or without further launching of said floating photovoltaic system into the water body.

In some advantageous embodiments, it is also and/or further proposed a method for realization of a floating photovoltaic solar system on a water site, according to any of the methods described hereabove, also and/or alternatively including one or more of the following features:
- the coils are raw metal coils;
- the method further includes the step of inserting buoyancy elements inside said floating tubes elements, before fixing the end-caps.

This authorizes manufacturing floating tube elements which are not waterproof, while keeping the floating feature. Accordingly the steps of joining together the edges of each respective open tube elements and of fixing the end-caps have not to be perfectly and hermetically executed and can authorize leaks;
- the end-caps having a centered or substantially centered aperture authorizing overflow, the method comprises, after launching, the step of having water leaking into the bottom of the floating tube elements up to the overflow aperture while the floating tube elements are immerged so as to augment the stability of the system. It is because the water playing a role of ballast, greatly improves the resistance against reversing in case of strong winds;
- the launching of the system comprises a step of placing two guiding elongated rails elements with one extremity on shore and the other extremity sufficiently immerged into the water body, a step of mechanically connecting together in series and in line at least two float assemblies to form a corresponding array of float assemblies, said array therefore forming a train of connected float assemblies while placing such array on said two parallel guiding elongated rails elements such as to form a launch ramp in order to support and guide said train of solar floats assemblies into the water body, the floating tube elements being arranged to slide along the rails and a step of driving such train entirely into the water body by pushing and/or pulling such train accordingly;
- providing said launch ramp with a total length superior to ten meters in order to support a plurality of at least two arrays of float assemblies, each array comprising, for example, at least two and advantageously five photovoltaic solar panels;
- the placing of the guiding elongated rails elements comprises providing an array of vertical posts having adjustable lengths foots driven into the ground using a post ramming machine or mounted onto other foundation elements such as concrete blocks or ground screws, to support such rails elements;
- the method further comprises a step of dispatching a plurality of arrays of float assemblies on a predetermined surface of the water body, a step of providing a linear array of a plurality of horizontal cables positioned at a depth of at least 0.5m under the water body surface, a step of using short vertical cables or chains for mechanically connecting said arrays of float assemblies to the horizontal cables, and a step of providing anchoring lines connecting said horizontal cables to an array of anchoring points installed on shore and/or at the bottom of the water body;
- the method further comprises the step of arranging around at least one array of float assemblies or a group of arrays of float assemblies, one pair of corresponding external (or peripheral) lateral horizontal cables and one pair of corresponding external longitudinal horizontal cables perpendicular to said pair of lateral horizontal cables and belonging to said array of a plurality of horizontal cables and securing such array or group of arrays with anchoring cables attached to a plurality of fixed foundation points;
- the solar float system being organized in parallel rows of at least two arrays of float assemblies, therefore creating external or intermediate parallel free water surface or canal having a width equal or superior to a predetermined value, the method of installation further comprises a maintenance method comprising the step of performing maintenance operations on said floating solar system by using a maintenance platform comprising a pair of buoyancy elements which are joined together by a frame structure in order to create a stable catamaran type platform floating on said two parallel canals along and/or between two adjacent rows of arrays of float assemblies and navigating above and between said rows of float assemblies to maintain and/or replace defective solar panels or modules.

By creating paths between the rows of float assemblies, which authorizes the catamaran platform to circulate above each specific row, maintenance is greatly ameliorated.

The present invention further proposes a floating photovoltaic solar system on a water site, to be used with the above-mentioned methods.

Another object of the invention is to propose a floating photovoltaic solar system on a water site having a shore and a water body, said system comprising photovoltaic panels and at least one array of float assemblies,
wherein each float assembly comprises at least one group of at least two floating tube elements for supporting said photovoltaic panels,
each of said floating tube elements having a thin elongated wall extending along a primary axis, the thin wall having a thickness of less than 1 mm, said floating tube elements being formed by bending metal ribbons or sheets extracted from raw metal coils using a spiral tube forming machine or a roll-forming machine, to obtain an open cylinder with adjacent longitudinal edges facing each other, and having means of fixation by mechanical crimping, fastening, gluing or welding of such adjacent longitudinal edges of such open cylinder to close longitudinally such floating tube elements,
each end of said floating tube elements being closed by an endcap,
wherein it comprises frame assemblies to support said photovoltaic panels in order to form said at least one array of float assemblies for forming said floating photovoltaic system.

A launching apparatus is used for launching said at least one array of float assembly forming said floating photovoltaic system into the water body.

In some advantageous embodiments, it is also and/or further proposed a floating photovoltaic solar system on a water site including one or more of the following features:
- each float assembly comprises at least one group of three parallel floating tube elements for supporting said photovoltaic panels;
- the floating tube element not being waterproof, the end-caps have a centered or substantially centered aperture authorizing overflow of water when said floating tube element is immerged;
- each floating tube element comprises at least one buoyancy element inside;
- the system comprises multiple mooring lines operably connected to said array of float assemblies;
- the system comprises anchoring lines connecting said mooring lines to an array of anchoring points;
- each floating tube element has a length superior to 5 m;
- each float assembly comprises a minimum of three frame elements extending along a direction which is perpendicular to said primary axis of said floating tube elements,
- said frame elements are operably connected to said floating tube elements;
- the system comprises a plurality of arrays of float assemblies, forming a train of connected float assemblies and the launching device comprises two parallel guiding elongated rails elements arranged to support and guide said train of solar floats assemblies into the water body;
- the system comprises an array of vertical posts having adjustable lengths foots to be driven into the ground or mounted on to foundation elements such as concrete blocks or ground screws, to support such rails elements;
- the system comprises a plurality of horizontal cables and a short vertical cables or chains mechanically connected to said arrays of float assemblies and anchoring lines connecting said horizontal cables to an array of anchoring points installed on shore and/or at the bottom of the water body;
- the system further comprises for at least one array of float assemblies or a group of arrays of float assemblies, one pair of corresponding external (or peripheral) lateral horizontal cables and one pair of corresponding external longitudinal horizontal cables perpendicular to said pair of lateral horizontal cables and belonging to said array of a plurality of horizontal cables and securing such array or group of arrays with anchoring cables attached to a plurality of fixed foundation points;
- one embodiment of the invention concerns a floating photovoltaic solar system comprising a maintenance platform comprising a pair of buoyancy elements which are joined together by a frame structure to form a catamaran type platform;
- one embodiment of the invention concerns a floating photovoltaic solar system comprising a water drip system, said water drip system comprising at least one perforated water pipe attached along the upper side of the solar panels using an array of fixation clips and an external water pump for pumping fresh water from a reservoir and/or the water body onto the upper surface of said solar panels;
- the water drip system comprises multiple perforated water pipes connected in a series manner by connecting the output inlet of a first perforated water pipe to the input inlet of the following float assembly.

Advantageously, another embodiment of the invention is to propose a maintenance process and apparatus according to the above-mentioned related and relevant part of the description and/or to provide a float layout installation configuration which uniquely enable the use of a specific floating platform to perform maintenance operations on an installed system in a safer manner and/or according to the above-mentioned description.

Another embodiment of the invention is to provide a water drip process and/or system for cleaning solar photovoltaic panels of a floating photovoltaic solar system as described above and/or eliminating the risk of accumulation of snow on the upper surface of the photovoltaic panels or modules of such a system and/or cleaning their upper surface in a continuous and automated manner, as described above and further described hereafter.

### BRIEF DESCRIPTION OF THE DRAWINGS

The above and other features and advantages of the present invention will become apparent upon review of the following summarized and detailed descriptions taken into conjunction and in a no limitating way with the accompanying drawings in which:
Figure **1** shows a schematic general diagram in perspective illustrating the different steps of one embodiment of the method and/or system of realization of a floating photovoltaic solar system according to the invention, using a spiral tube forming machine.
Figure **2** shows a view in perspective of another embodiment of the processing step of the invention to form the floating tube elements using a roll forming machine.
Figures **3A, 3B** & **3C** show perspective views at an angle of a float assembly which is arranged for supporting an array of five solar panels or modules, according to a first embodiment (Fig **3A** and **3B****)** with frame assemblies for supporting such panels, respectively equipped with said panels (Fig **3A****)** and without such panels (Fig **3B****),** and according to a second embodiment (Fig **3C****)** wherein the frame assembly is reduced as the junction between the floating tube elements is obtained by the mechanical structures or frames of the photovoltaic panels themselves.
Figures **4** shows a perspective view at an angle of a float assembly according to another embodiment of the invention, with three parallel floating tube elements arranged for supporting an array formed of two sets of five panels having their respective top part substantially adjacent to each other and being inclined in opposite directions.
Figures **5** shows a cross section view of another embodiment of a float assembly of the invention with tree floating tube elements arranged for supporting an array of solar panels orientated in the same direction.
Figures **6A, 6B** and **6C** show cross section views of three embodiments of elongated floating tube elements (also called float elements), used with the invention arranged to be partially filled with water. Figure **6D** shows a front view of an end-cap according to an embodiment of the invention.
Figure **7** is a flow diagram showing the first steps of the method for realization (fabricating and assembling) of the floating photovoltaic solar system according to the embodiment of the invention more particularly described herewith.
Figures **8** shows a 3D view diagram of a launching device equipped with an array (a train) of float assemblies according to one embodiment of the invention, comprising a ramp for assembling and launching into water several float assemblies in a row.
Figure **9** is a side view of an embodiment of the floating photovoltaic solar system showing a solution for anchoring an array of four float assemblies according to one embodiment of the invention, in the water body.
Figure **10** shows a top view diagram of an example of layout showing interconnecting and anchoring of a plurality of arrays of float assemblies according to an embodiment of the invention in a water body.
Figures **11A** and **11B** show two perspective views respectively of a platform and of a system comprising a platform for performing maintenance operations on a floating photovoltaic solar system according to an embodiment of the invention.
Figures **12** shows a perspective view at an angle of a float assembly equipped with a water drip system according to an embodiment of the invention.

### DETAILED DESCRIPTION OF THE INVENTION

The invention essentially provides a distributed method for fabricating and assembling a novel class of floating photovoltaic system which minimizes material usage, reduces shipping volume, simplifies field assembly, provide an optimized system layout with unobstructed water accessible service lanes for performing maintenance operations using a dedicated maintenance platform in order to improve the competitiveness of floating solar plants.

In the following the same numbers of reference will be preferably used for designating the same or similar elements.

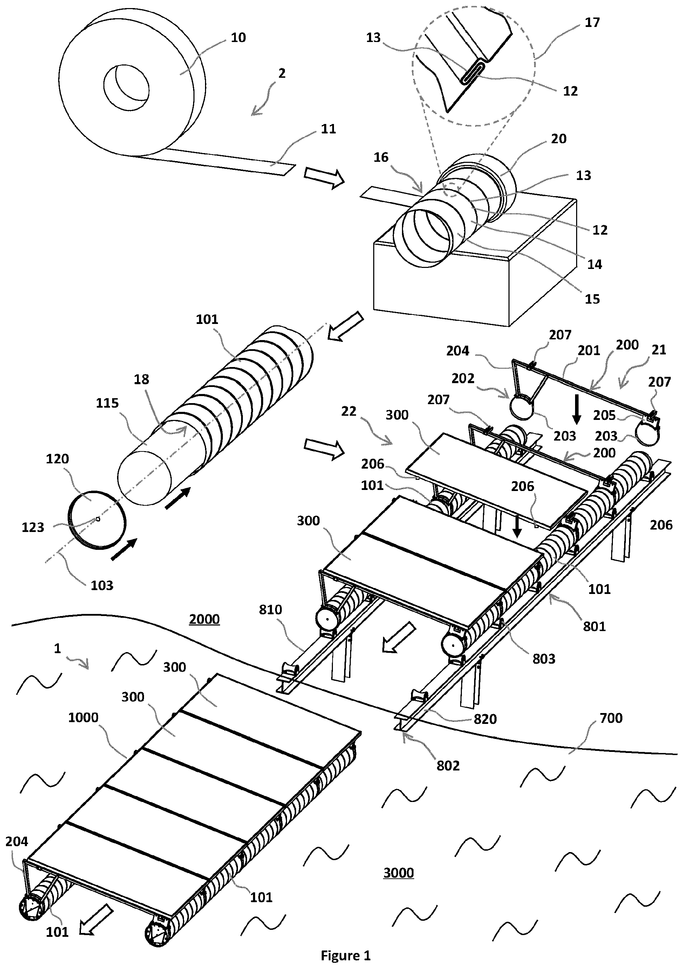

Figure **1** shows the principal steps of realization of a floating photovoltaic solar system **1** comprising the first step (referenced **2)** of obtaining and transporting at least one coil **10** of thin material, for instance a coil of a film of raw aluminum of ~2000 kg having a length of 5300 m, a width of 140 mm and a thickness of 1 mm.

The coil **10** is developed in a ribbon **11** with tools known per se and wounded progressively on itself with a determined offset in order to create the floating tube element **101** (step **3)** while fixing by crimping the elongated edges **12, 13** in vis à vis of two successive rounds **14** and **15** of the spiral **16** progressively formed by the spiral tube forming machine **20** known in itself.

On figure **1****,** (see enlarged view referenced **17)** the respective elongated edges **12** and **13** are mechanically joined together, using a mechanical crimping process by blocking their respective periphery inside a fold of the edge of the other as shown on figure **1** with a crimping device known per se.

As the spiral tube may not be perfectly waterproof, as in this embodiment, and in order to obtain the requested buoyancy, a plurality of containers **115,** for instance airbags, are introduced in the hollow part **18** of the tube, and are for example arranged to fill approximately two third of the interior volume of the tube for instance two airbags of 130 liters for a tube of 5 m of length and 30 cm of diameter.

Once the floating tube element **101** is completed endcaps **120** are fixed by crimping or any other known fixing means at both ends of the tube element, said endcaps having for example a central hole **123** to authorize ballasting with water.

The next step of the process (see reference **21)** is the junction of two floating tube elements **101,** i.e., a first tube element and a second tube element, parallelly disposed at a predetermined distance, with frame assemblies **200.**

Each frame assembly is for instance in aluminum (in the same metal than the tube elements), each of said frame assemblies being formed by a transversal elongated member **201** attached at its ends to two respective fixating collars **202.**

Each collar comprises for instance one open circle **203** to be bound to the tube and one structural beam member rigidly fixed to said open circle, at one end corresponding to the first tube via a beam member **204** of a first height of a predetermined value and at the other end corresponding to the second tube to a second beam member **205** of a second high of a smaller predetermined value, each fixed to a circle **203** on one end and to the transversal elongated member **201** on the other end, therefore implying a slope of several degrees, for instance 10° for the photovoltaic panel **300** which will be rigidly fixed on two parallel frame assemblies disposed at a distance to each other corresponding or slightly less than the width of the panels **300.**

The next step (step reference **22)** is the mounting of the photovoltaic panels on said frame assemblies one aside each other to form a float assembly **1000** of five panels **300,** the panels being fixed on said frame assemblies for example with fastening clip **206** such as clips commercialized under the trade mark PowAR Snap of the French firm ARaymond.

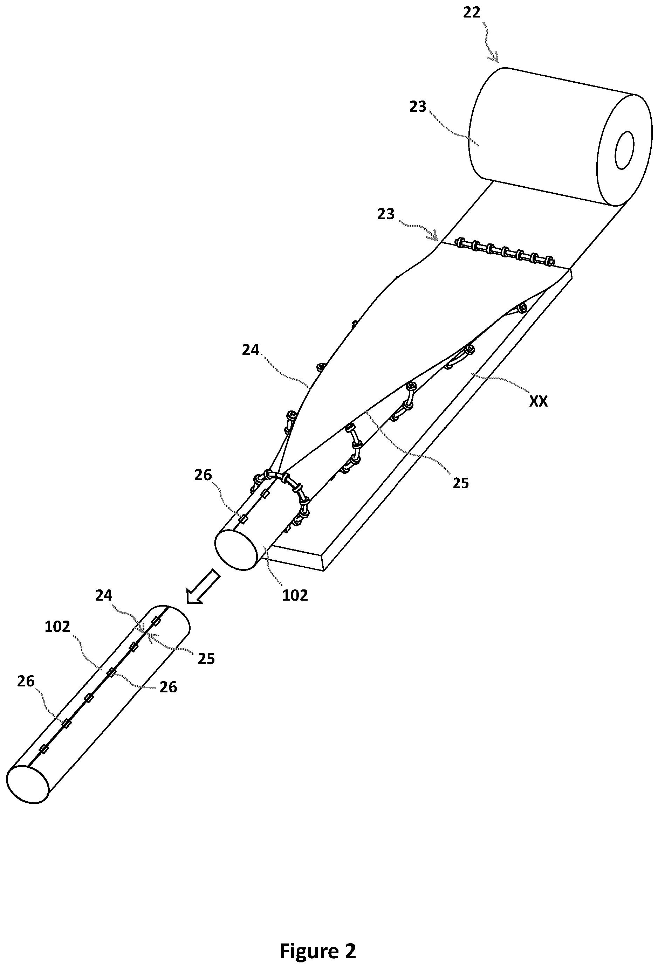

According to a preferred embodiment of the invention the float assembly is launched via two guiding elongated rails elements **810 & 820** parallelly disposed with one section **801** on shore 2000 and one extremity **802** immerged into the water body **3000.** Guiding rollers **840** allows a smooth displacement of the floating tube elements **101** on the rails in a way known per se. At the end the float assembly **1000** is floating on the water body **3000** and ready to be navigated to its anchoring place. Figure **2** shows another embodiment of forming of a tube element **102** using a roll forming machine **22** from a coil **23** of larger width for instance 95 cm, the length of the tube element being determined by cutting the coil at the right distance.

The edges **24** and **25** of the open tube are joined together for example with rivets or clips **26** and /or glued or welded or mechanically crimped together in order to obtain the finished floating tub element **102.**

The following steps of forming the system are for instance corresponding to the ones precedingly described hereabove.

Figure **1** **3A** and **3B** show 3D view diagrams of a float assembly **1000** according to one embodiment of the invention which is arranged for supporting an array of five photovoltaic panels or modules **300.**

This embodiment of solar float assembly **1000** comprises two identical hollow tubes elements **101** which are operably connected together with six successive frame assemblies **200** regularly disposed at a distance and arranged to support a panel two by two.

In this preferred embodiment of the invention, an array of five photovoltaic solar modules **300** are operably connected to the frame assemblies **200,** using multiple module support brackets **207,** which are designed to support the solar modules **300** at an inclined angle. In the Northern hemisphere, the solar modules are preferably inclined toward South and in the Southern hemisphere toward North. In both cases, the float assembly **1000** and hollow tube elements **101** have their principal axis **103** oriented along a North-South direction.

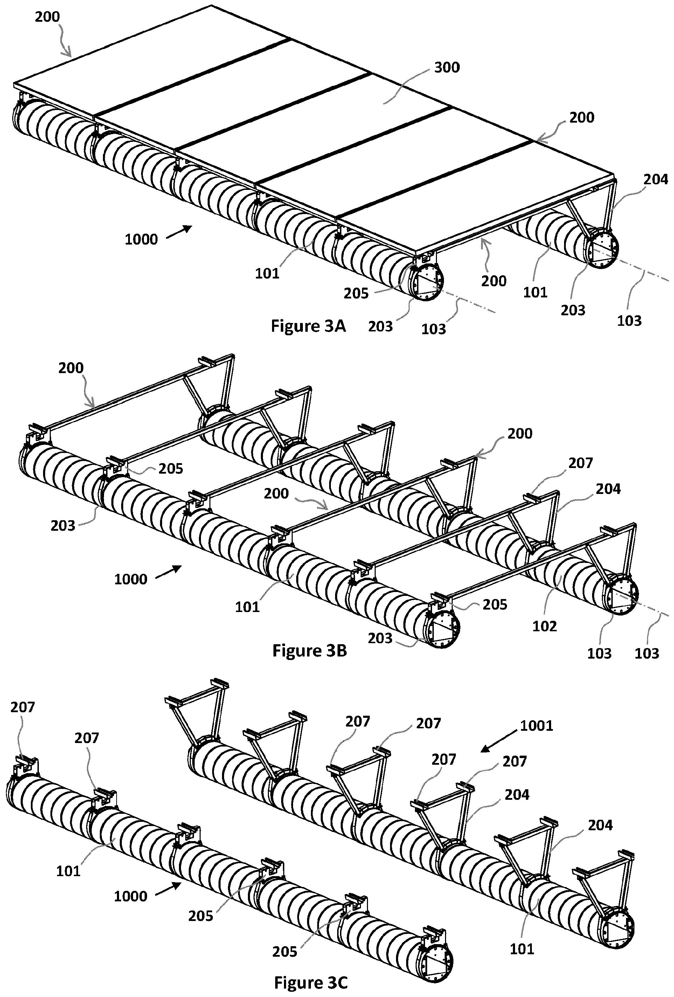

Figure **3C** shows a 3D view diagram of a float assembly **1001** according to another embodiment of the invention relying on frame assemblies which are segmented in two sub-frames.

A first set of sub-frame assemblies **205** are operably connected to the first tube element **101** and a second set of sub-frame assemblies **204** are operably connected to the second tube element **101.** In this embodiment of the invention, the two sub-frame assemblies are simply operably connected together through the metal frames or mechanical structures of the solar modules or photovoltaic panel **300.**

In this embodiment of the invention, the second sub-frame assemblies **204** are preferably equipped with a pair of two module support brackets **207** in order to improve the overall mechanical resistance of the float assembly **1000** when it is equipped with an array of solar modules.

In a preferred embodiment of the invention, the inclination angle of the solar modules is lower than 20° in order to minimize wind drag coefficients.

In alternative embodiments of the invention, the float assemblies may be equipped with a different number (N) of solar modules **300.** In these alternative embodiments, N+1 frame assemblies **200** are used for supporting N photovoltaic modules **300.**

In a preferred embodiment of the invention the hollow floating tube elements **101** have a cylindrical shape.

In other embodiments of the invention the hollow tubes may have a different cross section shape such as a square, rectangle, hexagonal, or any closed shape polygon profile.

The hollow tube elements **101** are operably connected to the frame assemblies **200** using thin sheet fastening solutions. The module support brackets **207** are operably connected to each frame assembly **200** using thin sheet fastening solutions.

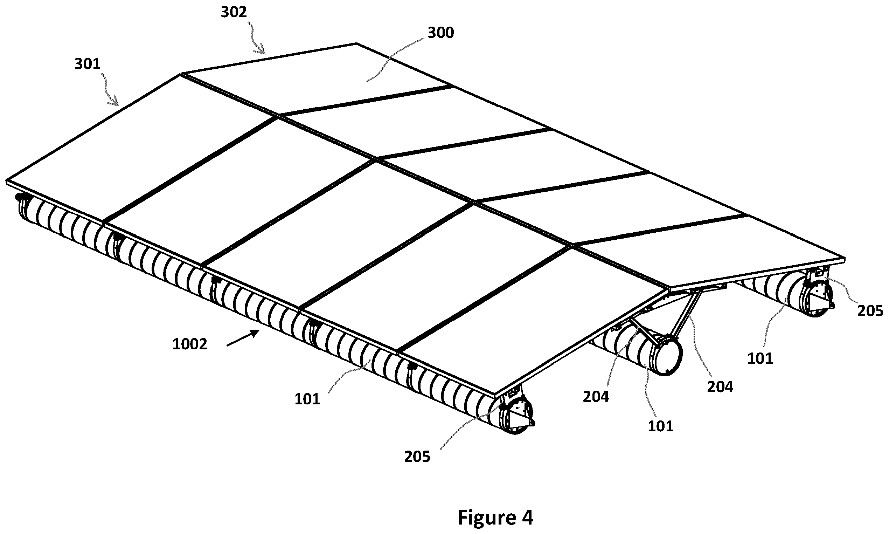

In another embodiment of the invention, the frame assemblies may be configured to support two rows **301** and **302** of photovoltaic modules **300** inclined at an angle toward East and West as illustrated in Figure **4****.** In this embodiment of the invention, a first set of sub-frame assemblies **205** are operably connected to a pair of side tube elements **101** and a second set of center sub-frame assemblies **204** are operably connected to a central third tube element **101.** In this embodiment of the invention, the sub-frame assemblies are simply operably connected together through the metal frames of the solar modules **300.** In the case of this design configuration, the floating tube elements **101** of the float assembly **1000** are preferably oriented along a North-South axis.

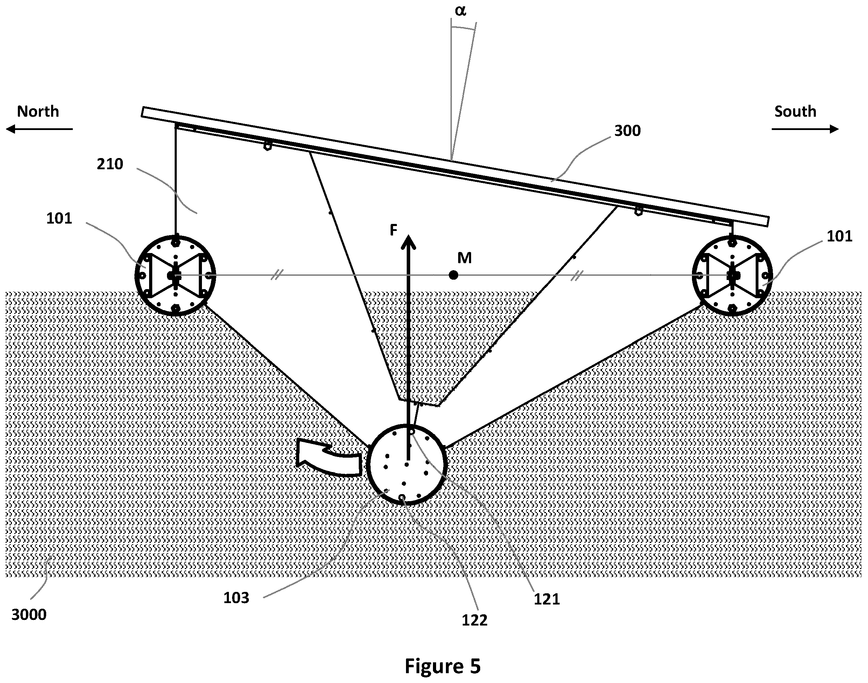

Figure **5** shows another embodiment of a float assembly of the invention comprising two upper tube elements **101** which are floating above the water body **3000** and a third lower tube element **103** which is entirely immersed in water. For this embodiment of the invention, a control system may be connected to inject air into the lower tube element **103** in order to dynamically adjust the inclination angle **(α)** of this float assembly.

For this embodiment of the invention, the control system may be equipped with air pumps instead of water pumps in order to fill the tubes of the float assemblies with air and push out water.

In the example illustrated in Figure **5****,** the float assembly rotates toward the South direction as the buoyancy of the lower tube element **103** increases when it is partially or fully filled with air. In such embodiment of the invention, short open-ended tubes may be connected to water-line connectors **122** which are located at the bottom of the tube endcaps of the floating tube element. These open-ended tubes enable water to go in and out of the floating tube elements when the control system adjusts the pressure of the air inside the tube internal cavity.

More precisely figure 5 shows a lateral view of a float assembly arranged to support an array of photovoltaic solar modules or panels 300. It comprises three hollow floating tube elements, i.e., two upper tube elements 101 (forming the general plan P), and one lower tube element 103. The tube elements 101 and 103 are connected together by N+1 frame assemblies 210 having a dissymmetric (with regard to the principal axis) form in order to hold the solar modules with an inclined angle **α,** for instance with a substantially "V" angle shape, the upper tubes being fixed to said branches for example, for one **(101)** at an intermediate external part of a first branch of the "V" and for the other **(101)** at the extremity part of the second branch of the "V". Due to the dissymmetry with regard to the central point **M,** and when the lower tube is filled with air for instance, the pressure of the force **F** generates the rotation (arrow on the figure) and therefore the variation of the inclination of the photovoltaic panel **300.**

More detailed explanation on the functioning of this embodiment may be found in patent document WO 2020/165272.

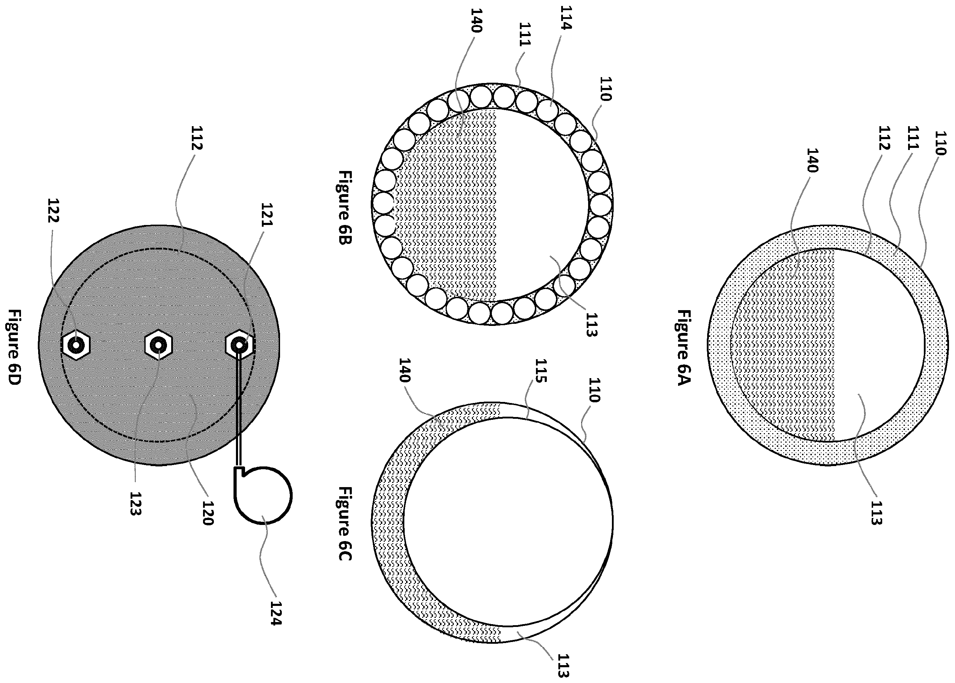

Figures **6A, 6B** and **6C** show cross section view diagrams of elongated cylindrically shaped tube float elements of an embodiment of a solar float assembly of the invention comprising internal cavities which are partially filled with water **140.** The remaining volume of the internal cavity **113** not filled by water is filled by air. In one embodiment of the invention, each tube float element comprises an external surface **110,** a ring-shaped core **111** and an internal surface **112.** The ring-shaped core **111** may be fabricated using a lightweight material such as expanded polystyrene or polyurethane foam.

In another embodiment of the invention, air filled cylindrical cans or spheres **114** may be used to partially or completely fill the ring-shaped core **111.** The outer surface **110** of the ring-shaped core **111** may be reinforced with a scratch resistant layer such as a rubber layer, hard plastic shell or a thin metal sheet. The inner surface **112** of the ring-shaped core **111** may be protected with a water proof layer such as a rubber, a plastic film or a thin metal sheet.

Figure **6C** is a cross section of another embodiment of a floating cylindrical tube element with an external surface **110** having an internal cavity **113** containing a plurality of containers **115,** for instance airbags floating on internal water **140** present in the interior of said tube element, each of said airbag having a cross section for example of a dimension comprised between 1/2 and 9/10 of the cross section of the tube element. More precisely the floating containers **115** may have a spherical shape, an oblong cylindrical shape or equivalent.

In a preferred embodiment of the invention, twenty to thirty floating containers **115** may be inserted inside a tube element with a length of five meters in order to ensure that a minimum buoyancy will be preserved if some of the floating containers **115** get perforated. The remaining volume of the internal cavity **113** not filled with water **140** is filled with air.

Both ends of each float tube are closed by an endcap **120** which is illustrated on Figure **6D****.** Each endcap **120** may comprise one vent hole **121** located in the upper section of the endcaps **120.** In some embodiment of the invention, the vent hole may be connected to an air pump **124** or an alternative source of pressurized air in order to adjust the pressure of the air located inside the tube internal cavity **113.**

Additional holes located in the center section **123** or lower section **122** of the endcaps may be added to let water in and partially fill the tube elements with water. After completion of the water filling process, the holes **122-123** can be closed with a cap in order to retain the volume of water inside the tubes. For installations on water reservoirs which can be temporally emptied, this solution provides a mean for keeping a mass of water inside each tube element in order to ballast the float structures which may then safely rest onto the floor of the reservoir.

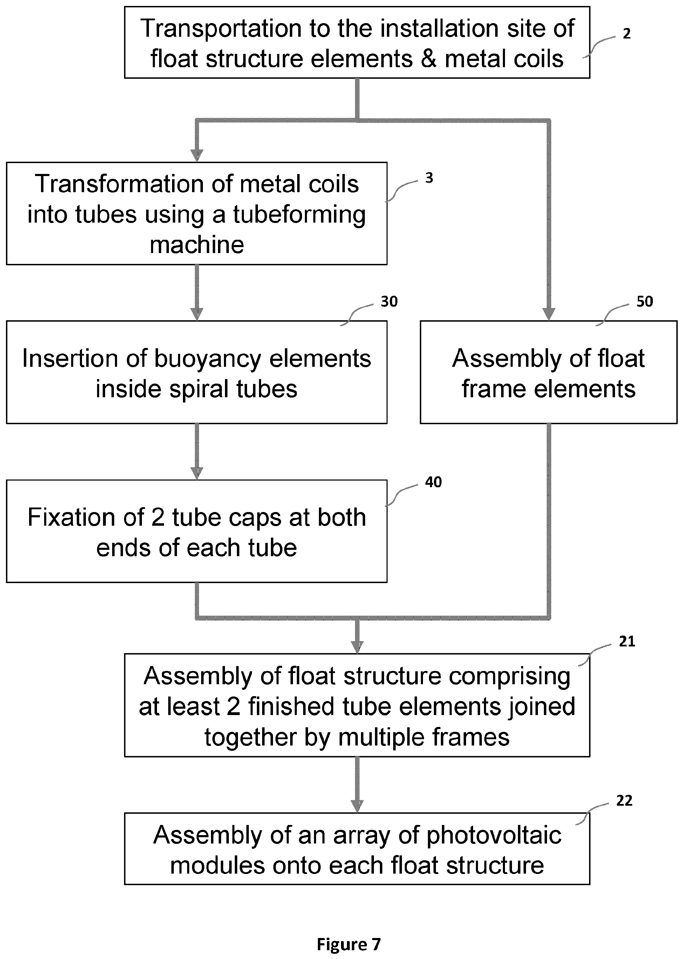

Figure 7 shows a flow diagram of an exemplary distributed method for fabricating and assembling a floating solar float according to the invention.

In a first step **2,** the elements of the float main structure and raw metal coils are transported onto (or near) the installation site of a floating solar plant.

In a second step **3** the raw metal coils are processed and transformed into tubes using a spiral tubeforming machine. In an alternative embodiment of the invention, the raw metal coils may be transformed into tubes using a roll-forming machine.

In a preferred embodiment of the invention, the edges of the metal strip are mechanically joint together using a mechanical crimping process.

In an alternative embodiment of the invention, a thin sheet fastening solution may be used for joining together the side edges of the metal strip.

In a third step **30,** buoyancy elements are inserted inside the float tubes.

In a preferred embodiment of the invention, the buoyancy elements comprise bags which are filled with air and then permanently sealed.

In another embodiment of the invention, the buoyancy elements may comprise low density material such as polystyrene or polyurethane foam as described in reference to figure **6B****.**

In a forth step **40,** two endcaps are attached to the ends of each float tube. The endcaps may be attached to the float tubes using thin sheet mechanical fastening solutions or other fastening methods know in the art.

Parallelly the float frame elements are assembled (step **50).**

In a fifth step **21,** a pair of finished tube elements are joined together with a linear array of frame assemblies in order to form the float structure of the invention.

In a preferred embodiment of the invention, the frame elements are assembled together onsite to form frame assemblies in order to reduce the volume required for transporting these elements to the site. The frame elements may be assembled together to form frame assemblies using thin sheet mechanical fastening solutions.

In a final step **22,** an array of photovoltaic modules are mounted onto each float assembly before launching this element into water.

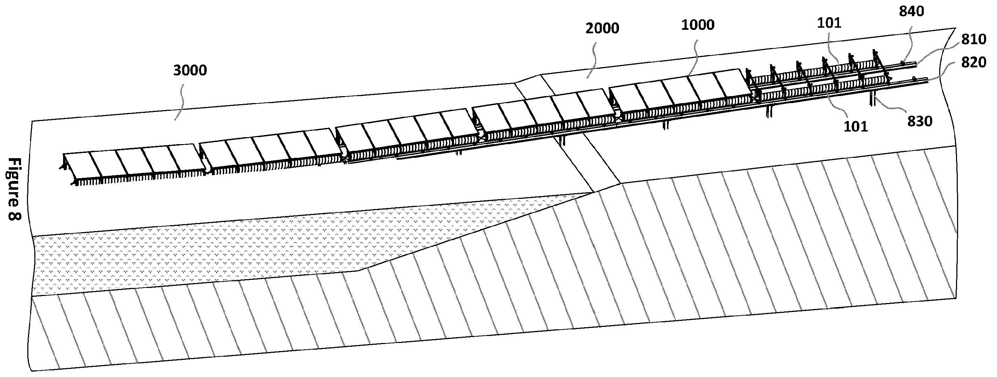

In a preferred embodiment of the invention, the solar floats equipped with photovoltaic modules are launched into water using a launch ramp as illustrated in Figure **8****.**

The launch ramp may comprise a pair of two rail elements **810** & **820** which may be equipped with rollers **840** having a sawhorse shape with a curvature complementary to the shape of the external surface of the floating tube elements **101,** in order to support and guide the main tube elements of the solar floats **1000.**

In a preferred embodiment of the invention, the launch ramp is configured to have a total length which is relatively long in order to support multiple float elements. The rail elements **810** & **820** are supported by an array of vertical posts **830.** These vertical posts may have adjustable lengths foots or simply driven into the ground using a post ramming machine or mounted onto other foundation elements such as concrete blocks or ground screws depending of the type and quality of the soil of the shore nearby the water body.

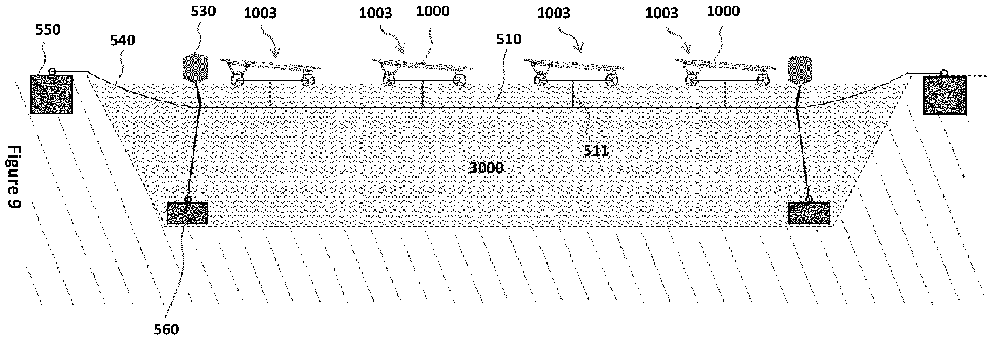

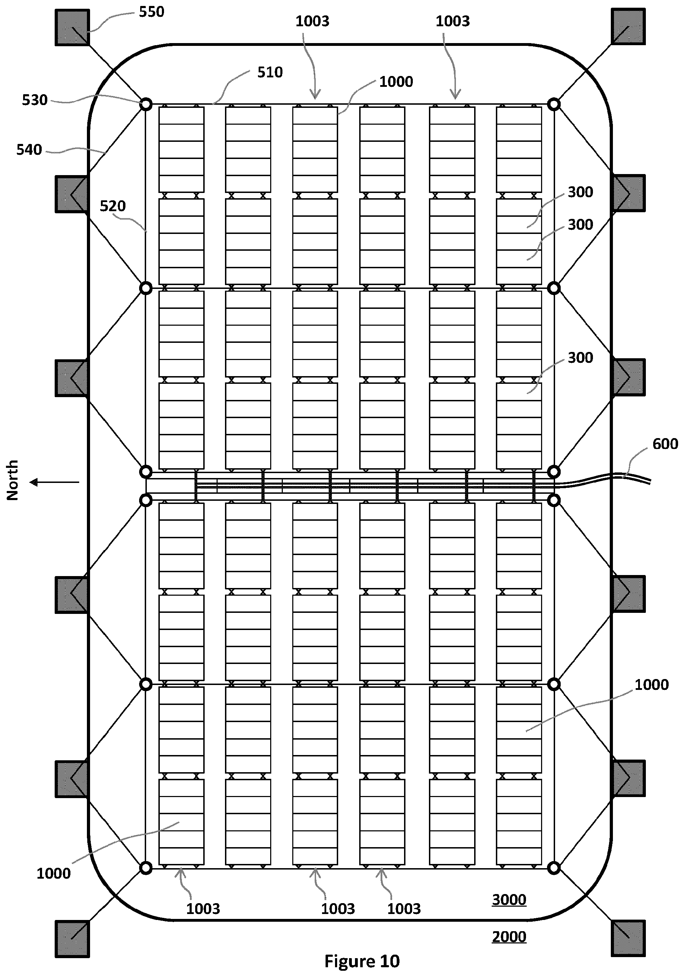

Figures **9** and **10** show respectively a side view diagram and a top view diagram of exemplary embodiments of different solutions for anchoring an array of solar float assemblies **1000** according to the invention in a water body.

Figure **9** shows in side view four arrays **1003** of float assemblies **1000.**

In this preferred embodiment of the invention, the float assemblies **1000** are mechanically connected to a linear array of horizontal cables **510.** In an advantageous embodiment of the invention, the horizontal cables **510** are positioned at a depth of at least 0.5m under the water surface in order to provide clear service paths between the rows of float assemblies. Short vertical cables or chains **511** are used for mechanically connecting the float assemblies **1000** to the horizontal cables **510.**

Figure **10** shows a floating photovoltaic solar system on a water body **3000** comprising two sets of six arrays **1003,** each forming a row of four float assemblies **1000** in series, each float assembly comprising five photovoltaic panels **300** connected in series to main electric cable for collecting electricity from the panels and providing it to a solar inverter (not represented) for instance on shore in a manner known per se.

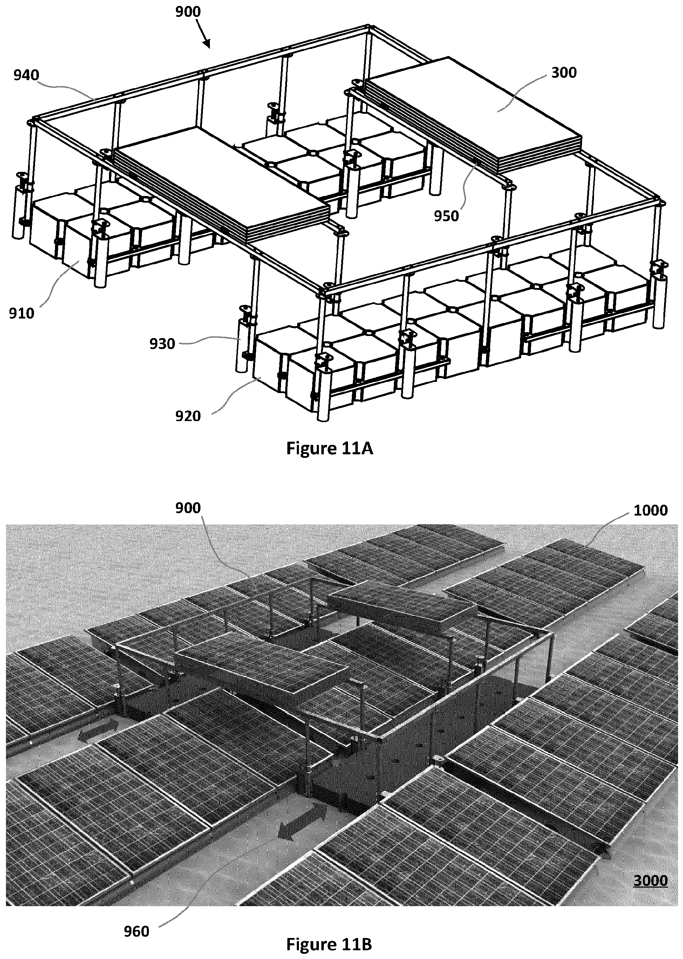

In such configuration, maintenance operations such as replacement of defective solar modules can easily be performed by a maintenance team using a narrow service boat or preferably using a dedicated maintenance platform as described hereafter in reference to figures **11A** and **11B****.**

In order to reduce the number of horizontal cables required (see figure **10****),** one or multiple float assemblies may be mechanically connected together in a series manner along the North-South direction and only their upper and lower ends are then mechanically connected to the horizontal cables **510.** The East and West side of each horizontal cable **510** are mechanically connected to vertical cables **520.**

A pair of horizontal **510** and vertical cables **520** forms a block of tracker float assemblies **1000** which are secured with anchoring cables **540** attached to one of multiple fixed foundation points which are installed on shore (example concrete pile **550)** or at the bottom of the water body (example **560**).

Ground anchors driven into the soil or solid ballast blocks may be used as fixed foundation points. Buoys **530** may be added at the end of the horizontal cables **510** in order to compensate vertical forces induced by the anchoring cables **540** connecting the horizontal **510** and vertical **520** cables to the foundations **550.**

The anchoring cables **540** may be equipped with tensioner devices in order to accommodate water height variations.

Figure **11A** and **11B** respectively show a 3D view diagram and a rendered illustration of a specific platform **900** for performing maintenance operations on the floating solar system according to the invention.

In a preferred embodiment of the invention, the maintenance platform **900** comprises a pair of buoyancy elements **910** & **920** which are joined together by a frame structure **940** in order to create a stable catamaran type platform which can navigates through a floating solar plant of the invention by employing the water access lanes **960** between the rows of float assemblies **1000.**

In this configuration, two maintenance persons can be positioned on each side of the maintenance platform to easily lift and replace a defective solar panel from a solar float assembly **1000.** In a preferred embodiment of the invention, the maintenance platform **900** is equipped with two parallel racks **950** at a determined distance from each other which is arranged to be slightly less than the width of the panels, to support such panels to be removed and/or repaired, and for storing accordingly new and defective solar panels **300.**

The buoyancy elements **910** & **920** are preferably equipped with side rollers **930** in order to guide the maintenance platform **900** along the tubes of the solar float assemblies **1000.**

As opposed to prior art floating solar systems which comprise densely packed blocks of interconnected plastic floats, the herein disclosed maintenance platform uniquely enables maintenance operations to be performed in a safer manner. The solar float assemblies according to the invention are organized in independent rows according to a specific layout as illustrated in Figure **10****.**

Using the herein disclosed specific maintenance platform, the maintenance persons do not need to walk across a floating solar plant on relatively narrow and unstable floating access lanes to replace defective solar panels. The herein disclosed maintenance platform can also be used for cleaning the solar panels.

In a preferred embodiment of the invention, this maintenance platform may be equipped with rotating brushes and/or water jets in order to clean the top surface of the solar panels in a semi-automated manner.

In the specific case of floating solar installations requiring frequent cleaning operations (exposed to a dusty environment or to frequent bird drops), the displacements of the maintenance platform may be controlled in a fully automated manner by an electronic control system.

In another embodiment of the invention, the solar floats according to the invention may be equipped with a specific water drip system (not shown).

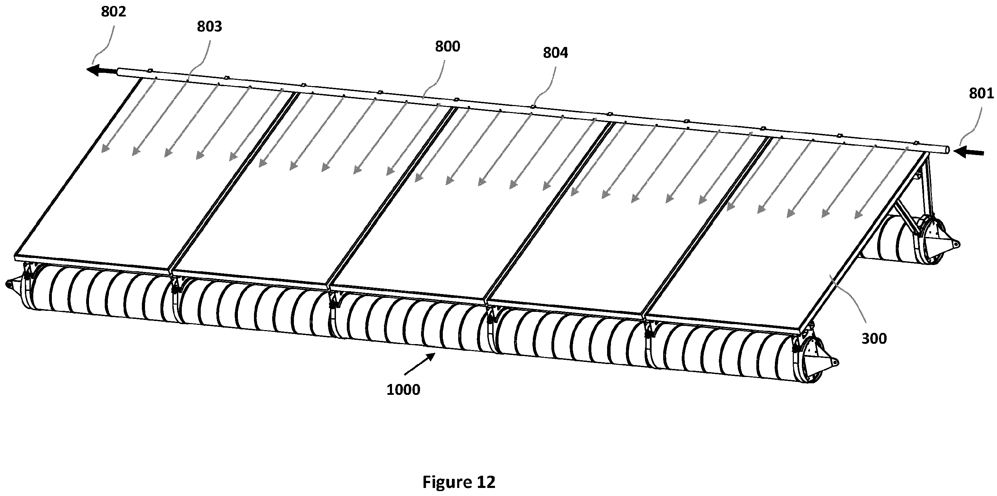

Figure **12** presents an exemplary embodiment of a water drip system comprising a perforated water pipe **800** which is attached along the upper side of the solar panels **300** using an array of fixation clips **804.**

An external water pump (not illustrated) is used for pumping fresh water from the water body or the reservoir onto which the floating solar system is installed.

Multiple float assemblies may be connected in a series manner by connecting the output inlet **802** of the perforated water pipe to the input inlet **801** of the following float assembly **1000.** The number and opening diameter of the water pipe perforations **803** should be optimized depending on the flowrate of the selected water pumps and the number of float assemblies **1000** connected in series.

This water drip solution provides a mean for cleaning the upper surface of the solar panels **300** in a fully automated manner.

As the temperature of water pumped at a depth greater then ~1m is always positive, this water drip system also provides a solution for preventing the accumulation of snow on the surface of the solar panels.

In the specific case of floating solar systems installed on sites which are exposed to heavy snow falls, the herein disclosed water drip solution provides a mean for continuously melting the snowflakes when they are falling onto the surface of the solar panels using the calories stored in the deep water of the reservoir.

An electronic control system may be added in order to stop or adjust the flowrate of the water pumps in an optimized manner depending on the external environmental conditions (sun irradiance, water temperature, air temperature, wind-speed...).

In the specific case of sites subject to very cold temperatures, the water pumps should always be started before the external air temperature drops below 0°C in order to ensure that the water inside the water pipes does not freeze. For these extremely cold sites, all the water pipes of the water drip system should preferably be thermally insulated in order to maximize the system overall efficiency and eliminate the risk of water freezing inside the water pipes.

With the possibility of easy maintenance and cleaning of the photovoltaic panels, it is possible to install large islands of float assemblies covering great superficies (more than 1000 square meters), typically for instance an array of more than 100 individual assemblies of five photovoltaic panels for instance connected together.

This invention is not to be limited by the embodiments disclosed, including any shown in the drawings or exemplified in the specifications, which are given by way of example or illustration and not of limitation.

The scope of the invention shall only be limited by the claims.

## Claims

1. A method for realization of a floating photovoltaic solar system (1) on a water site, said water site having a shore (2000) and a water body (3000), said system comprising photovoltaic panels (300) each having a mechanical structure and at least one array of float assemblies, each float assembly (1000) comprising at least one group of at least two floating tube elements (101) for supporting said photovoltaic panels, wherein it comprises the following steps:
- obtaining and transporting on the water site coils (10) of thin material having a thickness of less than 1 mm,
- processing on shore and in situ at least two elongated ribbons (11) or at least two extended sheets obtained from said coils for deforming said ribbons or bending said sheets into at least two corresponding thin wall elongated hollow open tube elements, the thin wall having a thickness of less than 1 mm, said open tubes elements extending along a respective primary axis and having respectively unjointed elongated edges (12, 13) arranged to lie against each other, said processing including the step of using a spiral tube forming machine (20) in case of ribbons or a roll-forming machine (22) in case of sheets,
- mechanically joining together, the elongated edges of said ribbons or of said sheets using a mechanical crimping, fastening or fixing process, for forming said respective floating tube elements,
- fixing an endcap (120) to each end of each of said floating tube elements,
- joining together said floating tube elements of each of said group of floating tube elements, with frame assemblies (200) and mounting said photovoltaic panels onto said frame assemblies or joining together said floating tube elements of each group by fixing the mechanical structure itself of the photovoltaic panels on said floating tube elements, in order to form said at least one array of float assemblies and forming accordingly said floating photovoltaic system,
and launching said floating photovoltaic system into water.

2. The method according to claim 1, **characterized in that** said processing is using a spiral tube forming machine to deform said ribbons in spiral having their unjointed longitudinal adjacent elongated edges mechanically crimped together to fabricate said respective floating tube elements.

3. The method according to claim 1, **characterized in that** said processing is using a roll forming machine to bend said sheets in order to have their unjointed elongated edges relying against each other and then having them mechanically joined together using such mechanical crimping, fastening or fixing process for forming said respective floating tube elements.

4. The method according to any of the preceding claims, **characterized in that** the coils are raw metal coils.

5. The method according to any of the preceding claims **characterized in that** it further includes the step of inserting buoyancy elements inside said floating tubes elements, before fixing the end-caps, advantageously, the end-caps having a centered or substantially centered aperture authorizing overflow, the method comprises, after launching, the step of having water leaking into the bottom of the floating tube elements up to the overflow aperture while said floating tube elements are immerged so as to augment the stability of the system.

6. The method according to any of the preceding claims, **characterized in that** the launching of the system comprises a step of placing two guiding elongated rails elements with one extremity on shore and the other extremity sufficiently immerged into the water body, a step of mechanically connecting together in series and in line at least two float assemblies to form a corresponding array of float assemblies, said array therefore forming a train of connected float assemblies while placing such array on said two parallel guiding elongated rails elements such as to form a launch ramp in order to support and guide said train of solar floats assemblies into the water body, the floating tube elements being arranged to slide along the rails and a step of driving such train entirely into the water body by pushing and/or pulling such train accordingly.

7. The method according to claim 6, **characterized in that** providing said launch ramp with a total length superior to ten meters in order to support a plurality of at least two arrays of float assemblies, each array comprising at least five photovoltaic solar panels, advantageously, **characterized in that** the placing of the guiding elongated rails elements comprises providing an array of vertical posts having adjustable lengths foots driven into the ground using a post ramming machine or mounted onto other foundation elements such as concrete blocks or ground screws, to support such rails elements.

8. The method according to any of the preceding claims, **characterized in that** the method further comprises a step of dispatching a plurality of arrays of float assemblies on a predetermined surface of the water body, a step of providing a linear array of a plurality of horizontal cables positioned at a depth of at least 0.5 m under the water surface, and a step of using short vertical cables or chains for mechanically connecting said arrays of float assemblies to the horizontal cables, and a step of providing anchoring lines connecting said horizontal cables to an array of anchoring points installed on shore and/or at the bottom of the water body, advantageously, **characterized in that** the method further comprises the step of arranging around at least one array of float assemblies or a group of arrays of float assemblies, one pair of corresponding external (or peripheral) lateral horizontal cables and one pair of corresponding external longitudinal horizontal cables perpendicular to said pair of lateral horizontal cables and belonging to said array of a plurality of horizontal cables and securing such array or group of arrays with anchoring cables attached to a plurality of fixed foundation points.

9. The method according to any of the preceding claims, **characterized in that** the solar float system being organized in parallel rows of at least two arrays of float assemblies, therefore creating external or intermediate parallel free water surface or canal having a width equal or superior to a predetermined value, the method of installation further comprises a maintenance method comprising the step of performing maintenance operations on said floating solar system by using a maintenance platform comprising a pair of buoyancy elements which are joined together by a superior frame structure in order to create a stable catamaran type platform floating on said two parallel canals along and/or between two adjacent rows of arrays of float assemblies and navigating above and between said rows of float assemblies to maintain and/or replace defective solar modules.

10. A floating photovoltaic solar system (1) on a water site having a shore (2000) and a water body (3000), said system comprising photovoltaic panels (300) and at least one array of float assemblies,
wherein each float assembly (1000) comprises at least one group of at least two floating tube elements (101) for supporting said photovoltaic panels,
each of said floating tube elements having a thin elongated wall extending along a primary axis, the thin wall having a thickness of less than 1 mm, said floating tube elements being formed by bending metal ribbons (11) or sheets extracted from raw metal coils (10) using a spiral tube forming machine (20) or a roll-forming machine (22), to obtain an open cylinder with adjacent longitudinal edges (12, 13) facing each other, and having means of fixation by mechanical crimping, fastening, gluing or welding of such adjacent longitudinal edges of such open cylinder to close longitudinally such floating tube elements,
each end of said floating tube elements being closed by an endcap (120),
wherein it comprises frame assemblies (200) to support said photovoltaic panels in order to form said at least one array of float assemblies for forming said floating photovoltaic system

11. A floating photovoltaic solar system according to claim 10, **characterized in that** the floating tube element not being waterproof, the end-caps have a substantially centered aperture authorizing overflow of water when said floating tube element is immerged.

12. A floating photovoltaic solar system according to any of the claims 10 to 11, **characterized in that** each floating tube element comprises at least one buoyancy element inside.

13. A floating photovoltaic solar system according to any of the claims 10 to 12, **characterized in that** the system comprises multiple mooring lines operably connected to said array of float assemblies, advantageously, **characterized in that** the system comprises anchoring lines connecting said mooring lines to an array of anchoring points.

14. A floating photovoltaic solar system according to any of the claims 10 to 13, **characterized in that** each float assembly comprises a minimum of three frame elements extending along a direction which is perpendicular to said primary axis of said floating tube elements.

15. A floating photovoltaic solar system according to any of the claims 10 to 14, **characterized in that** the system comprises a plurality of arrays of float assemblies, forming a train of connected float assemblies and the launching device comprises two parallel guiding elongated rails elements arranged to support and guide said train of solar floats assemblies into the water body.

16. A floating photovoltaic solar system according to any of the claims 10 to 15, **characterized in that** the system comprises a plurality of horizontal cables and a short vertical cables or chains mechanically connected to said arrays of float assemblies and anchoring lines connecting said horizontal cables to an array of anchoring points installed on shore and/or at the bottom of the water body, advantageously **characterized in that** the system further comprises for at least one array of float assemblies or a group of arrays of float assemblies, one pair of corresponding external (or peripheral) lateral horizontal cables and one pair of corresponding external longitudinal horizontal cables perpendicular to said pair of lateral horizontal cables and belonging to said array of a plurality of horizontal cables and securing such array or group of arrays with anchoring cables attached to a plurality of fixed foundation points.

17. A floating photovoltaic solar system according to any of the claims 10 to 16, **characterized in that** the floating photovoltaic solar system comprises a maintenance platform comprising a pair of buoyancy elements which are joined together by a frame structure to form a catamaran type platform.

18. A floating photovoltaic solar system according to any of the claims 10 to 17, **characterized in that** it comprises a water drip system, said water drip system comprising at least one perforated water pipe attached along the upper side of the solar panels using an array of fixation clips and an external water pump for pumping fresh water from the reservoir onto the upper surface of said solar panel, advantageously, **characterized in that** the water drip system comprises multiple perforated water pipes connected in a series manner by connecting the output inlet of a first perforated water pipe to the input inlet of the following float assembly.

## Patentansprüche

1. Verfahren zum Realisieren eines schwimmenden Photovoltaiksolarsystems (1) an einem Wasserstandort, wobei der Wasserstandort ein Ufer (2000) und ein Gewässer (3000) aufweist, das System umfassend Photovoltaikpaneele (300), die jeweils eine mechanische Struktur und mindestens eine Anordnung von Schwimmerbaugruppen aufweisen, jede Schwimmerbaugruppe (1000) umfassend mindestens eine Gruppe von mindestens zwei schwimmenden Rohrelementen (101) zum Tragen der Photovoltaikpaneele, wobei es die folgenden Schritte umfasst:
- Erhalten und Transportieren, an dem Wasserstandort, von Rollen (10) aus dünnem Material, das eine Dicke von weniger als 1 mm aufweist,
- Verarbeiten, an Land und in situ, von mindestens zwei länglichen Bändern (11) oder mindestens zwei ausgedehnten Blechen, die aus den Rollen erhalten werden, zum Verformen der Bänder oder Biegen der Bleche zu mindestens zwei entsprechenden dünnwandigen länglichen hohlen offenen Rohrelementen, wobei die dünne Wand eine Dicke von weniger als 1 mm aufweist, wobei sich die offenen Rohrelemente entlang einer jeweiligen Hauptachse erstrecken und jeweils nicht zusammengefügte längliche Kanten (12, 13) aufweisen, die angeordnet sind, um aneinander anzuliegen, wobei das Verarbeiten den Schritt eines Verwendens einer Spiralrohrformmaschine (20) im Falle von Bändern oder einer Walzformmaschine (22) im Falle von Blechen einschließt,
- mechanisches Zusammenfügen der länglichen Kanten der Bänder oder der Bleche unter Verwendung eines mechanischen Crimp-, Befestigungs- oder Fixierprozesses zum Formen der jeweiligen schwimmenden Rohrelemente,
- Fixieren einer Endkappe (120) an jedem Ende jedes der schwimmenden Rohrelemente,
- Zusammenfügen der schwimmenden Rohrelemente jeder der Gruppe von schwimmenden Rohrelementen mit Rahmenbaugruppen (200) und Montieren der Photovoltaikpaneele auf den Rahmenbaugruppen oder Zusammenfügen der schwimmenden Rohrelemente jeder Gruppe durch Fixieren der mechanischen Struktur der Photovoltaikpaneele selbst an den schwimmenden Rohrelementen, um die mindestens eine Anordnung von Schwimmerbaugruppen zu formen und dementsprechend das schwimmende Photovoltaiksystem zu formen,
und Aussetzen des schwimmenden Photovoltaiksystems in das Wasser.

2. Verfahren nach Anspruch 1, **dadurch gekennzeichnet, dass** das Verarbeiten eine Spiralrohrformmaschine verwendet, um die Bänder spiralförmig zu verformen, wobei ihre nicht zusammengefügten longitudinalen angrenzenden länglichen Kanten mechanisch zusammengecrimpt werden, um die jeweiligen schwimmenden Rohrelemente herzustellen.

3. Verfahren nach Anspruch 1, **dadurch gekennzeichnet, dass** das Verarbeiten eine Walzformmaschine verwendet, um die Bleche zu biegen, um ihre nicht zusammengefügten länglichen Kanten aneinander anliegen zu haben, und sie dann unter Verwendung eines derartigen mechanischen Crimp-, Befestigungs- oder Fixierprozesses zum Formen der jeweiligen schwimmenden Rohrelemente mechanisch zusammenzufügen.

4. Verfahren nach einem der vorstehenden Ansprüche,
**dadurch gekennzeichnet, dass** die Rollen Rohmetallrollen sind.

5. Verfahren nach einem der vorstehenden Ansprüche,
**dadurch gekennzeichnet, dass** es ferner den Schritt eines Einfügens von Auftriebselementen im Inneren der schwimmenden Rohrelemente vor dem Fixieren der Endkappen einschließt, vorteilhafterweise, wobei die Endkappen eine zentrierte oder im Wesentlichen zentrierte Öffnung aufweisen, die ein Überlaufen zulässt, wobei das Verfahren nach dem Aussetzen den Schritt umfasst, Wasser in den Boden der schwimmenden Rohrelemente bis zu der Überlauföffnung eindringen zu lassen, während die schwimmenden Rohrelemente eingetaucht sind, um die Stabilität des Systems zu erhöhen.

6. Verfahren nach einem der vorstehenden Ansprüche,
**dadurch gekennzeichnet, dass** das Aussetzen des Systems einen Schritt eines Platzierens von zwei länglichen Führungsschienenelementen mit einem äußersten Ende an Land und dem anderen äußersten Ende ausreichend in das Gewässer eingetaucht, einen Schritt eines mechanischen Miteinanderverbindens von mindestens zwei Schwimmerbaugruppen seriell und in einer Linie, um eine entsprechende Anordnung von Schwimmerbaugruppen zu formen, wobei die Anordnung somit einen Zug von verbundenen Schwimmerbaugruppen formt, während eine derartige Anordnung auf den zwei parallelen länglichen Führungsschienenelementen platziert wird, wie, um eine Aussetzrampe zu formen, um den Zug von Solarschwimmerbaugruppen in das Gewässer zu tragen und zu führen, wobei die schwimmenden Rohrelemente angeordnet sind, um entlang der Schienen zu gleiten, und einen Schritt eines Treibens eines derartigen Zugs vollständig in das Gewässer durch dementsprechendes Schieben und/oder Ziehen eines derartigen Zugs umfasst.

7. Verfahren nach Anspruch 6, **dadurch gekennzeichnet, dass** die Aussetzrampe mit einer Gesamtlänge von größer als zehn Metern bereitgestellt wird, um eine Vielzahl von mindestens zwei Anordnungen von Schwimmerbaugruppen zu tragen, jede Anordnung umfassend mindestens fünf Photovoltaiksolarpaneele, vorteilhafterweise, **dadurch gekennzeichnet, dass** das Platzieren der länglichen Führungsschienenelemente ein Bereitstellen einer Anordnung von vertikalen Pfosten umfasst, die längenverstellbare Füße aufweisen, die unter Verwendung einer Pfostenrammmaschine in die Erde getrieben oder auf anderen Fundamentelementen, wie Betonblöcken oder Erdschrauben, montiert werden, um derartige Schienenelemente zu tragen.

8. Verfahren nach einem der vorstehenden Ansprüche,
**dadurch gekennzeichnet, dass** das Verfahren ferner einen Schritt eines Verteilens einer Vielzahl von Anordnungen von Schwimmerbaugruppen auf einer zuvor bestimmten Oberfläche des Gewässers, einen Schritt des Bereitstellens einer linearen Anordnung einer Vielzahl von horizontalen Kabeln, die in einer Tiefe von mindestens 0,5 m unter der Wasseroberfläche positioniert sind, und einen Schritt des Verwendens kurzer vertikaler Kabel oder Ketten zum mechanischen Verbinden der Anordnungen von Schwimmerbaugruppen mit den horizontalen Kabeln, und einen Schritt des Bereitstellens von Verankerungsleinen umfasst, die die horizontalen Kabel mit einer Anordnung von Verankerungspunkten, die an Land und/oder an dem Boden des Gewässers installiert sind, verbinden, vorteilhafterweise, **dadurch gekennzeichnet, dass** das Verfahren ferner den Schritt eines Anordnens, um mindestens eine Anordnung von Schwimmerbaugruppen oder eine Gruppe von Anordnungen von Schwimmerbaugruppen herum, eines Paars von entsprechenden externen (oder peripheren) lateralen horizontalen Kabeln und eines Paars von entsprechenden externen longitudinalen horizontalen Kabeln, die senkrecht zu dem Paar von lateralen horizontalen Kabeln verlaufen und zu der Anordnung einer Vielzahl von horizontalen Kabeln gehören, und eines Sicherns einer derartigen Anordnung oder Gruppe von Anordnungen mit Verankerungskabeln, die an einer Vielzahl von festen Fundamentpunkten angebracht sind, umfasst.

9. Verfahren nach einem der vorstehenden Ansprüche,
**dadurch gekennzeichnet, dass** das Solarschwimmersystem in parallelen Reihen von mindestens zwei Anordnungen von Schwimmerbaugruppen organisiert ist, wobei somit eine externe oder dazwischenliegende parallele freie Wasseroberfläche oder ein Kanal geschaffen wird, die eine Breite, die gleich oder größer als ein zuvor bestimmter Wert ist, aufweisen, wobei das Installationsverfahren ferner ein Wartungsverfahren umfasst, umfassend den Schritt eines Durchführens von Wartungsarbeiten an dem schwimmenden Solarsystem durch Verwenden einer Wartungsplattform, umfassend ein Paar von Auftriebselementen, die durch eine obere Rahmenstruktur zusammengefügt sind, um eine stabile Plattform eines Katamarantyps zu schaffen, die auf zwei parallelen Kanälen entlang und/oder zwischen zwei angrenzenden Reihen von Anordnungen von Schwimmerbaugruppen schwimmt und über und zwischen den Reihen von Schwimmerbaugruppen navigiert, um defekte Solarmodule zu warten und/oder auszutauschen.

10. Schwimmendes Photovoltaiksolarsystem (1) an einem Wasserstandort, der ein Ufer (2000) und ein Gewässer (3000) aufweist, das System umfassend
Photovoltaikpaneele (300) und mindestens eine Anordnung von Schwimmerbaugruppen,
wobei jede Schwimmerbaugruppe (1000) mindestens eine Gruppe von mindestens zwei schwimmenden Rohrelementen (101) zum Tragen der Photovoltaikpaneele umfasst,
wobei jedes der schwimmenden Rohrelemente eine dünne längliche Wand aufweist, die sich entlang einer Hauptachse erstreckt, wobei die dünne Wand eine Dicke von weniger als 1 mm aufweist, wobei die schwimmenden Rohrelemente durch Biegen von Metallbändern (11) oder -blechen, die aus Rohmetallrollen (10) entnommen werden, unter Verwendung einer Spiralrohrformmaschine (20) oder einer Walzformmaschine (22) geformt werden, um einen offenen Zylinder mit angrenzenden longitudinalen Kanten (12, 13), die einander zugewandt sind, zu erhalten, und Fixierungsmittel durch mechanisches Crimpen, Befestigen, Kleben oder Schweißen derartiger angrenzender longitudinaler Kanten eines derartigen offenen Zylinders aufweisen, um derartige schwimmende Rohrelemente longitudinal zu verschließen,
wobei jedes Ende der schwimmenden Rohrelemente durch eine Endkappe (120) verschlossen ist,
wobei es Rahmenbaugruppen (200) umfasst, um die Photovoltaikpaneele zu tragen, um die mindestens eine Anordnung von Schwimmerbaugruppen zum Formen des schwimmenden Photovoltaiksystems zu formen

11. Schwimmendes Photovoltaiksolarsystem nach Anspruch 10,
**dadurch gekennzeichnet, dass** das schwimmende Rohrelement nicht wasserdicht ist, wobei die Endkappen eine im Wesentlichen zentrierte Öffnung aufweisen, die das Überlaufen von Wasser zulässt, wenn das schwimmende Rohrelement eingetaucht ist.

12. Schwimmendes Photovoltaiksolarsystem nach einem der Ansprüche 10 bis 11, **dadurch gekennzeichnet, dass** jedes schwimmende Rohrelement im Inneren mindestens ein Auftriebselement umfasst.

13. Schwimmendes Photovoltaiksolarsystem nach einem der Ansprüche 10 bis 12, **dadurch gekennzeichnet, dass** das System mehrere Festmacherleinen umfasst, die mit der Anordnung von Schwimmerbaugruppen wirkverbunden sind, vorteilhafterweise, **dadurch gekennzeichnet, dass** das System Verankerungsleinen umfasst, die die Festmacherleinen mit einer Anordnung von Verankerungspunkten verbinden.

14. Schwimmendes Photovoltaiksolarsystem nach einem der Ansprüche 10 bis 13, **dadurch gekennzeichnet, dass** jede Schwimmerbaugruppe wenigstens drei Rahmenelemente umfasst, die sich entlang einer Richtung erstrecken, die senkrecht zu der Hauptachse der schwimmenden Rohrelemente verläuft.

15. Schwimmendes Photovoltaiksolarsystem nach einem der Ansprüche 10 bis 14, **dadurch gekennzeichnet, dass** das System eine Vielzahl von Anordnungen von Schwimmerbaugruppen umfasst, die einen Zug von verbundenen Schwimmerbaugruppen formen, und die Aussetzvorrichtung zwei parallele längliche Führungsschienenelemente umfasst, die angeordnet sind, um den Zug von Solarschwimmerbaugruppen in das Gewässer zu tragen und zu führen.

16. Schwimmendes Photovoltaiksolarsystem nach einem der Ansprüche 10 bis 15, **dadurch gekennzeichnet, dass** das System eine Vielzahl von horizontalen Kabeln und kurze vertikale Kabel oder Ketten, die mit den Anordnungen von Schwimmerbaugruppen mechanisch verbunden sind, und Verankerungsleinen umfasst, die die horizontalen Kabel mit einer Anordnung von Verankerungspunkten, die an Land und/oder an dem Boden des Gewässers installiert sind, verbinden, vorteilhafterweise, **dadurch gekennzeichnet, dass** das System ferner für mindestens eine Anordnung von Schwimmerbaugruppen oder eine Gruppe von Anordnungen von Schwimmerbaugruppen ein Paar von entsprechenden externen (oder peripheren) lateralen horizontalen Kabeln und ein Paar von entsprechenden externen longitudinalen horizontalen Kabeln, die senkrecht zu dem Paar von lateralen horizontalen Kabeln sind und zu der Anordnung einer Vielzahl von horizontalen Kabeln gehören, und das Sichern einer derartigen Anordnung oder Gruppe von Anordnungen mit Verankerungskabeln, die an einer Vielzahl von festen Fundamentpunkten angebracht sind, umfasst.

17. Schwimmendes Photovoltaiksolarsystem nach einem der Ansprüche 10 bis 16, **dadurch gekennzeichnet, dass** das schwimmende Photovoltaiksolarsystem eine Wartungsplattform umfasst, umfassend ein Paar von Auftriebselementen, die durch eine Rahmenstruktur zusammengefügt sind, um eine Plattform des Katamarantyps zu formen.

18. Schwimmendes Photovoltaiksolarsystem nach einem der Ansprüche 10 bis 17, **dadurch gekennzeichnet, dass** es ein Wassertropfsystem umfasst, das Wassertropfsystem umfassend mindestens eine perforierte Wasserleitung, die entlang der obersten Seite der Solarpaneele unter Verwendung einer Anordnung von Fixierungsclips angebracht ist, und eine externe Wasserpumpe zum Pumpen von Frischwasser aus dem Reservoir auf die oberste Oberfläche des Solarpaneels, vorteilhafterweise, **dadurch gekennzeichnet, dass** das Wassertropfsystem mehrere perforierte Wasserleitungen, die in einer seriellen Weise durch Verbinden des Auslasses einer ersten perforierten Wasserleitung mit dem Einlass der folgenden Schwimmerbaugruppe verbunden sind, umfasst.

## Revendications

1. Procédé permettant de réaliser un système solaire photovoltaïque flottant (1) sur un site aquatique, ledit site aquatique présentant un rivage (2000) et une masse d'eau (3000), ledit système comprenant des panneaux photovoltaïques (300) présentant chacun une structure mécanique et au moins un réseau d'ensembles flotteurs, chaque ensemble flotteur (1000) comprenant au moins un groupe d'au moins deux éléments tubulaires flottants (101) destinés à supporter lesdits panneaux photovoltaïques, dans lequel il comprend les étapes suivantes consistant à :
- obtenir et transporter, sur le site aquatique, des bobines (10) de matériau mince présentant une épaisseur inférieure à 1 mm,
- traiter à terre et in situ au moins deux rubans allongés (11) ou au moins deux feuilles étendues obtenus à partir desdites bobines pour déformer lesdits rubans ou plier lesdites feuilles en au moins deux éléments tubulaires ouverts creux allongés de paroi mince correspondants, la paroi mince présentant une épaisseur inférieure à 1 mm, lesdits éléments tubulaires ouverts s'étendant le long d'un axe primaire respectif et présentant respectivement des bords allongés non assemblés (12, 13) agencés pour venir en appui l'un contre l'autre, ledit traitement comportant l'étape consistant à utiliser une machine de formage de tubes en spirale (20) dans le cas de rubans ou une machine de profilage (22) dans le cas de feuilles,
- assembler mécaniquement les bords allongés desdits rubans ou desdites feuilles à l'aide d'un processus mécanique de sertissage, d'attache ou de fixation, pour former lesdits éléments tubulaires flottants respectifs,
- fixer un embout (120) à chaque extrémité de chacun desdits éléments tubulaires flottants,
- assembler lesdits éléments tubulaires flottants de chacun dudit groupe d'éléments tubulaires flottants avec des ensembles de cadre (200) et monter lesdits panneaux photovoltaïques sur lesdits ensembles de cadre ou assembler lesdits éléments tubulaires flottants de chaque groupe en fixant la structure mécanique elle-même des panneaux photovoltaïques sur lesdits éléments tubulaires flottants, afin de former ledit au moins un réseau d'ensembles flotteurs et former en conséquence ledit système photovoltaïque flottant,
et mettre ledit système photovoltaïque flottant à l'eau.

2. Procédé selon la revendication 1, **caractérisé en ce que** ledit traitement utilise une machine de formage de tubes en spirale pour déformer lesdits rubans en spirale dont les bords allongés longitudinaux adjacents non assemblés sont mécaniquement sertis ensemble pour fabriquer lesdits éléments tubulaires flottants respectifs.

3. Procédé selon la revendication 1, **caractérisé en ce que** ledit traitement utilise une machine de profilage pour plier lesdites feuilles afin d'avoir leurs bords allongés non assemblés en appui l'un contre l'autre, puis en les faisant assembler mécaniquement à l'aide d'un tel processus de sertissage, d'attache ou de fixation mécaniques pour former lesdits éléments tubulaires flottants respectifs.

4. Procédé selon l'une quelconque des revendications précédentes,
**caractérisé en ce que** les bobines sont des bobines métalliques brutes.

5. Procédé selon l'une quelconque des revendications précédentes,
**caractérisé en ce qu'il** comporte en outre l'étape consistant à insérer des éléments de flottabilité à l'intérieur desdits éléments tubulaires flottants, avant de fixer les embouts, avantageusement, les embouts présentant une ouverture centrée ou sensiblement centrée autorisant un débordement, le procédé comprend, après lancement, l'étape consistant à laisser de l'eau pénétrer dans le fond des éléments tubulaires flottants jusqu'à l'ouverture de débordement alors que lesdits éléments tubulaires flottants sont immergés de manière à augmenter la stabilité du système.

6. Procédé selon l'une quelconque des revendications précédentes,
**caractérisé en ce que** le lancement du système comprend une étape consistant à mettre en place deux éléments de rails de guidage allongés avec une extrémité à terre et l'autre extrémité suffisamment immergée dans la masse d'eau, une étape consistant à relier mécaniquement ensemble en série et en ligne au moins deux ensembles flotteurs pour former un réseau correspondant d'ensembles flotteurs, ledit réseau formant donc un train d'ensembles flotteurs reliés tout en plaçant un tel réseau sur lesdits deux éléments de rails de guidage allongés parallèles de manière à former une rampe de mise à l'eau afin de soutenir et de guider ledit train d'ensembles flotteurs solaires dans la masse d'eau, les éléments tubulaires flottants étant agencés pour glisser le long des rails et une étape consistant à entraîner ce train entièrement dans la masse d'eau en poussant et/ou en tirant ce train en conséquence.

7. Procédé selon la revendication 6, **caractérisé en ce que** ladite rampe de mise à l'eau est pourvue d'une longueur totale supérieure à dix mètres afin de supporter une pluralité d'au moins deux réseaux d'ensembles flotteurs, chaque réseau comprenant au moins cinq panneaux solaires photovoltaïques, avantageusement, **caractérisé en ce que** le placement des éléments de rails de guidage allongés comprend la fourniture d'un réseau de poteaux verticaux ayant des pieds réglables en longueur, enfoncés dans le sol à l'aide d'une machine de pilonnage de poteaux ou montés sur d'autres éléments de fondation tels que des blocs de béton ou des vis de terre, pour supporter de tels éléments de rails.

8. Procédé selon l'une quelconque des revendications précédentes, **caractérisé en ce que** le procédé comprend en outre une étape consistant à répartir une pluralité de réseaux d'ensembles flotteurs sur une surface prédéterminée de la masse d'eau, une étape consistant à fournir un réseau linéaire d'une pluralité de câbles horizontaux positionnés à une profondeur d'au moins 0,5 m sous la surface de l'eau, et une étape consistant à utiliser des câbles ou chaînes verticaux courts pour relier mécaniquement lesdits réseaux d'ensembles flotteurs aux câbles horizontaux, et une étape consistant à fournir des lignes d'ancrage reliant lesdits câbles horizontaux à un réseau de points d'ancrage installés à terre et/ou au fond de la masse d'eau, avantageusement, **caractérisé en ce que** le procédé comprend en outre l'étape consistant à agencer autour d'au moins un réseau d'ensembles flotteurs ou un groupe de réseaux d'ensembles flotteurs, une paire de câbles horizontaux latéraux externes (ou périphériques) correspondants et une paire de câbles horizontaux longitudinaux externes correspondants perpendiculaires à ladite paire de câbles horizontaux latéraux et appartenant audit réseau d'une pluralité de câbles horizontaux et à sécuriser un tel réseau ou groupe de réseaux au moyen de câbles d'ancrage raccordés à une pluralité de points de fondation fixes.

9. Procédé selon l'une quelconque des revendications précédentes, **caractérisé en ce que** le système à flotteur solaire étant organisé en rangées parallèles d'au moins deux réseaux d'ensembles flotteurs, créant de ce fait une surface d'eau libre ou un canal parallèle externe ou intermédiaire présentant une largeur égale ou supérieure à une valeur prédéterminée, le procédé d'installation comprend en outre un procédé d'entretien comprenant l'étape consistant à réaliser des opérations d'entretien sur ledit système solaire flottant à l'aide d'une plate-forme d'entretien comprenant une paire d'éléments de flottabilité qui sont assemblés entre eux par une structure de cadre supérieure afin de créer une plate-forme stable de type catamaran flottant sur lesdits deux canaux parallèles le long et/ou entre deux rangées adjacentes de réseaux d'ensembles flotteurs et naviguant au-dessus et entre lesdites rangées d'ensembles flotteurs pour entretenir et/ou remplacer des modules solaires défectueux.

10. Système solaire photovoltaïque flottant (1) sur un site aquatique présentant un rivage (2000) et une masse d'eau (3000), ledit système comprenant
des panneaux photovoltaïques (300) et au moins un réseau d'ensembles flotteurs,
dans lequel chaque ensemble flotteur (1000) comprend au moins un groupe d'au moins deux éléments tubulaires flottants (101) pour supporter lesdits panneaux photovoltaïques,
chacun desdits éléments tubulaires flottants présentant une paroi allongée mince s'étendant le long d'un axe primaire, la paroi mince présentant une épaisseur inférieure à 1 mm, lesdits éléments tubulaires flottants étant formés par pliage de rubans métalliques (11) ou de feuilles métalliques extraites de bobines métalliques brutes (10) à l'aide d'une machine de formage de tubes en spirale (20) ou d'une machine de profilage (22), pour obtenir un cylindre ouvert avec des bords longitudinaux adjacents (12, 13) se faisant face, et présentant des moyens de fixation par sertissage mécanique, fixation par attache, collage ou soudage de tels bords longitudinaux adjacents d'un tel cylindre ouvert pour fermer longitudinalement de tels éléments tubulaires flottants,
chaque extrémité desdits éléments tubulaires flottants étant fermée par un embout (120),
dans lequel il comprend des ensembles de cadre (200) pour supporter lesdits panneaux photovoltaïques afin de former ledit au moins un réseau d'ensembles flotteurs pour former ledit système photovoltaïque flottant

11. Système solaire photovoltaïque flottant selon la revendication 10, **caractérisé en ce que** l'élément tubulaire flottant n'étant pas étanche, les embouts présentent une ouverture sensiblement centrée autorisant un débordement d'eau lorsque ledit élément tubulaire flottant est immergé.

12. Système solaire photovoltaïque flottant selon l'une quelconque des revendications 10 à 11, **caractérisé en ce que** chaque élément tubulaire flottant comprend au moins un élément de flottabilité à l'intérieur.

13. Système solaire photovoltaïque flottant selon l'une quelconque des revendications 10 à 12, **caractérisé en ce que** le système comprend de multiples lignes d'amarrage reliées de manière fonctionnelle audit réseau d'ensembles flotteurs, avantageusement, **caractérisé en ce que** le système comprend des lignes d'ancrage reliant lesdites lignes d'amarrage à un réseau de points d'ancrage.

14. Système solaire photovoltaïque flottant selon l'une quelconque des revendications 10 à 13, **caractérisé en ce que** chaque ensemble flotteur comprend un minimum de trois éléments de cadre s'étendant le long d'une direction qui est perpendiculaire audit axe primaire desdits éléments tubulaires flottants.

15. Système solaire photovoltaïque flottant selon l'une quelconque des revendications 10 à 14, **caractérisé en ce que** le système comprend une pluralité de réseaux d'ensembles flotteurs, formant un train d'ensembles flotteurs reliés et le dispositif de lancement comprend deux éléments de rails de guidage allongés parallèles agencés pour supporter et guider ledit train d'ensembles flotteurs solaires dans la masse d'eau.

16. Système solaire photovoltaïque flottant selon l'une quelconque des revendications 10 à 15, **caractérisé en ce que** le système comprend une pluralité de câbles horizontaux et des câbles ou chaînes verticaux courts reliés mécaniquement auxdits réseaux d'ensembles flotteurs et des lignes d'ancrage reliant lesdits câbles horizontaux à un réseau de points d'ancrage installés à terre et/ou au fond de la masse d'eau, avantageusement **caractérisé en ce que** le système comprend en outre pour au moins un réseau d'ensembles flotteurs ou un groupe de réseaux d'ensembles flotteurs, une paire de câbles horizontaux latéraux externes (ou périphériques) correspondants et une paire de câbles horizontaux longitudinaux externes correspondants perpendiculaires à ladite paire de câbles horizontaux latéraux et appartenant audit réseau d'une pluralité de câbles horizontaux et la fixation solide de ce réseau ou groupe de réseaux avec des câbles d'ancrage raccordés à une pluralité de points de fondation fixes.

17. Système solaire photovoltaïque flottant selon l'une quelconque des revendications 10 à 16, **caractérisé en ce que** le système solaire photovoltaïque flottant comprend une plate-forme d'entretien comprenant une paire d'éléments de flottabilité qui sont assemblés entre eux par une structure de cadre pour former une plate-forme de type catamaran.

18. Système solaire photovoltaïque flottant selon l'une quelconque des revendications 10 à 17, **caractérisé en ce qu'il** comprend un système de goutte à goutte d'eau, ledit système de goutte à goutte d'eau comprenant au moins une conduite d'eau perforée fixée le long du côté supérieur des panneaux solaires à l'aide d'un réseau de clips de fixation et d'une pompe à eau externe pour pomper l'eau douce du réservoir sur la surface supérieure dudit panneau solaire, avantageusement, **caractérisé en ce que** le système de goutte à goutte d'eau comprend de multiples conduites d'eau perforées reliées en série en reliant la sortie d'une première conduite d'eau perforée à l'entrée de l'ensemble flotteur suivant.
